# EUROPEAN PATENT SPECIFICATION

(11) **EP 0 702 760 B1**
(45) Date of publication and mention of the grant of the patent: **13.10.1999**
(21) Application number: 95913241.6
(22) Date of filing: 29.03.1995
(51) Int. Cl.: F16D 25/12, F16D 48/02

(54) **ACTUATION SYSTEMS AND MECHANISMS**
ANTRIEBSVORRICHTUNG UND MECHANISMUS
SYSTEMES ET MECANISMES D'ACTIONNEMENT

(30) Priority: 29.03.1994 GB 9406271; 12.07.1994 GB 9414035; 18.10.1994 GB 9420981
(43) Date of publication of application: 27.03.1996
(73) Proprietor: Kongsberg TechMatic UK Limited, Leamington Spa, Warwickshire CV31 3RA (GB)
(72) Inventor: HARRIES, David A., The Headland, Headland Road, Warwickshire CV37 8ER (GB)
(74) Representative: Watts, Peter Graham
(86) International application number: GB9500709
(87) International publication number: WO9526472

(56) References cited:
- EP-A- 0 158 004
- EP-A- 0 561 506
- DE-A- 3 719 399

## Description

This invention relates to actuation systems and mechanisms and in particular, though not exclusively, to such actuation systems and mechanisms for the operation of vehicle clutches used in semi-automatic transmissions of the form described in, for example, the Applicants earlier European patents Nos. 0038113, 0043660, 0059035 and 0101220.

In such transmissions, in which the engagement and disengagement of the clutch is controlled by an electronic unit in response to operation of the throttle and gear selector lever by the vehicle driver, there is a need not only to operate the clutch under the control of the control unit but also to monitor the state of engagement of the clutch.

Typically clutch engagement is monitored by sensing the position of a clutch release lever which operates the release bearing of the clutch. This is normally achieved by using a slave cylinder to operate the clutch release bearing which also includes a cylinder travel sensor. This necessarily results in a significantly more bulky slave cylinder which is unique to the particular installation. Also certain installations are too crowded to allow the use of such a bulky slave cylinder.

It is an object of the present invention to provide an actuation system which is suitable for the operation of a clutch release lever and which allows the travel of the release lever to be monitored at a location remote from the lever.
Thus according to the present invention there is provided an actuation system comprising a source of pressurised fluid which actuates a slave cylinser at a first location via a fluid flow path, the system being characterised by the provision of a displacement means in said fluid flow path, said displacement means being at a second location remote from the slave cylinder and including a component which is displaced by the pressurised fluid from the source to provide a displacement proportional to the actuating movement of the slave cylinder caused by the pressurised fluid, and sensing means at the second location operable to measure said displacement to indicate the actuating movement of the slave at the first location.
As will be appreciated the slave cylinder of an actuation system as described above is suitable for the operation of a clutch release lever and the displacement valve and associated sensing means, which will provide the indication of the state of engagement of the clutch, may be located at any convenient position remote from the slave cylinder.

In one particularly convenient arrangement the source of pressurised fluid may comprise an hydraulic powerpack including an hydraulic reservoir, pump and accumulator, said displacement valve also being part of said powerpack. The Applicants earlier European patent No. 0430943 describes a suitable form of powerpack.

The displacement means may comprise a piston axially slideable in a bore of the housing to define two fluid tight chambers one on each side of the piston, one chamber being connected with the slave cylinder and the other chamber being connected with the source of pressurised fluid, and a displacement member which moves with the piston and extends outside the housing for co-operation with the sensing means.

The displacement means may be in the form of a displacement valve with a passage interconnecting said chambers on each side of the piston, and a valve means disposed in said passage to cut-off or control the passage of fluid between said chambers and hence between said source and slave cylinder, said valve means being arranged to be open when said piston is in a retracted condition in which said other chamber is at a minimum volume and said slave cylinder is not operated and said valve means being arranged to close as said piston is displaced along said bore against a bias force in response to a rise in the pressure of said pressurised fluid thus raising the pressure level in said one chamber to cause actuating movement of the slave cylinder proportional to the movement of said piston.

Conveniently a rod may extend from one side of the piston along said bore through said one chamber and exiting from said housing, and sensing means in the form of a rotary or linear transducer may be connected with said rod to provide a signal output representative of the actuating movement of the slave cylinder.

The valve means which controls the passage of actuating fluid between the two chambers may comprise a check valve which is spring-loaded to a normally closed condition, said check valve being opened when said piston is in its retracted condition by pin means which contacts an end of the bore and unseats the check valve.

In accordance with a further aspect of the present invention there is also provided a displacement valve for use in an hydraulic actuation system, said displacement valve comprising a housing with a piston slideable in a bore of the housing to define two fluid tight chambers one on each side of the piston, one chamber being connected with the slave cylinder and the other chamber being connected with the source of pressurised fluid, a sensing means operatively connected with the piston, a passage interconnecting said chambers, and a valve means disposed in said passage to cut off or control the passage of fluid between said chambers and hence between said source and slave cylinder, said valve means being arranged to be open when said piston is in a retracted condition in which said other chamber is at a minimum volume and said slave cylinder is not operated and said valve means being arranged to close as said piston is displaced along said bore against a bias force in response to a rise in said pressurised fluid thus raising the pressure level in said one chamber to cause actuating movement of the slave cylinder proportional to the movement of said rod and which is measured by said sensing means.

In some semi-automatic transmissions the electronic control unit also reduces the throttle setting during gear changes to provide a smoother change (see for example, the Applicants earlier patents GB-B2210664, GB-B2233053 and their earlier application No. W093/00227.

The invention also provides a mechanism for interconnecting the operation of a vehicle clutch and throttle, said mechanism comprising a first linkage member moveable in a first direction in response to disengagement of the clutch and in a second direction in response to engagement of the clutch, a second linkage member connected with the vehicle throttle and moveable in said first direction to close the throttle, and in said second direction to open the throttle, and a lost motion connector connecting the first and second linkage members, said lost motion connection allowing initial movement of the first linkage member in the first and second directions without any corresponding movement of the second linkage member in said first and second directions.

The lost motion connection may also include a resilient means which provides the force transmitting path between the first and second linkage members for movement of the second linkage member in said first direction by the first linkage member.

In a preferred arrangement the rod of a displacement valve of the form described above comprises the first linkage member of the above mechanism.

The resilient means of the mechanism may be provided by a second piston within the rod or an extension thereof which is operatively connected with the second linkage member and is biased in said first direction by spring means.

The spring means of the mechanism may be a fixed rate spring (eg a coil spring) which provides a fixed phase relationship between the movement of the first and second linkage members in said first direction.

Alternatively the second piston defines a chamber within the rod which is connected with said one chamber to allow movement of the second piston within the rod dependent on the level of pressure in said one chamber to enable the phase relationship between the movement of the first and second linkage members in said first direction to be varied.

The rod of the displacement valve may also be used to operate a hill holder valve in an associated vehicle braking system.

The various aspects of the present invention will now be described, by way of example only, with reference to the accompanying drawings in which:-
Figure 1 shows a schematic diagram of an hydraulic actuation system according to the invention for the operation of a vehicle clutch;
Figures 2 and 2a-2h and Figures 3 and 3a-3h show various stages in the disengagement and re-engagement of a clutch and the opening and closing of an associated throttle using a mechanism in accordance with a further aspect of the present invention;
Figure 4 shows a schematic section through a displacement valve in accordance with the invention which includes a lost motion connection with an associated throttle linkage;
Figure 5 and 6 show schematic sections through alternative forms of displacement valves with lost motion connections;
Figure 7 shows a schematic section through a displacement valve, potentiometer and hill holding valve combination;
Figure 8 is a schematic diagram of an alternative form of hydraulic displacement means in accordance with the invention;
Figure 9 a further form of actuation system in accordance with the invention in which the displacement valve and solenoid control valve are formed as an integral unit;
Figure 10 shows in more detail the solenoid valve of figure 9;
Figures 11 and 12 show a still further form of displacement means in accordance with the invention;
Figure 13 shows a sectional view on line X - X of figure 12;
Figure 14 shows section details of a still further form of actuator in accordance with the present invention;
Figure 15 shows details of a replenishing valve used in the actuator of figure 14;
Figure 16 shows a still further form of actuation system embodying the present invention which has separate reservoirs for the associated power pack and actuator;
Figure 17 shows part of the system of figure 16 with a common reservoir for its power pack and actuator;
Figures 18 and 18a show part of the system of figure 16 with an anti-cavitation feature, and
Figure 19 shows a still further form of actuation system with a pump start-up circuit to relieve pump load at start up.

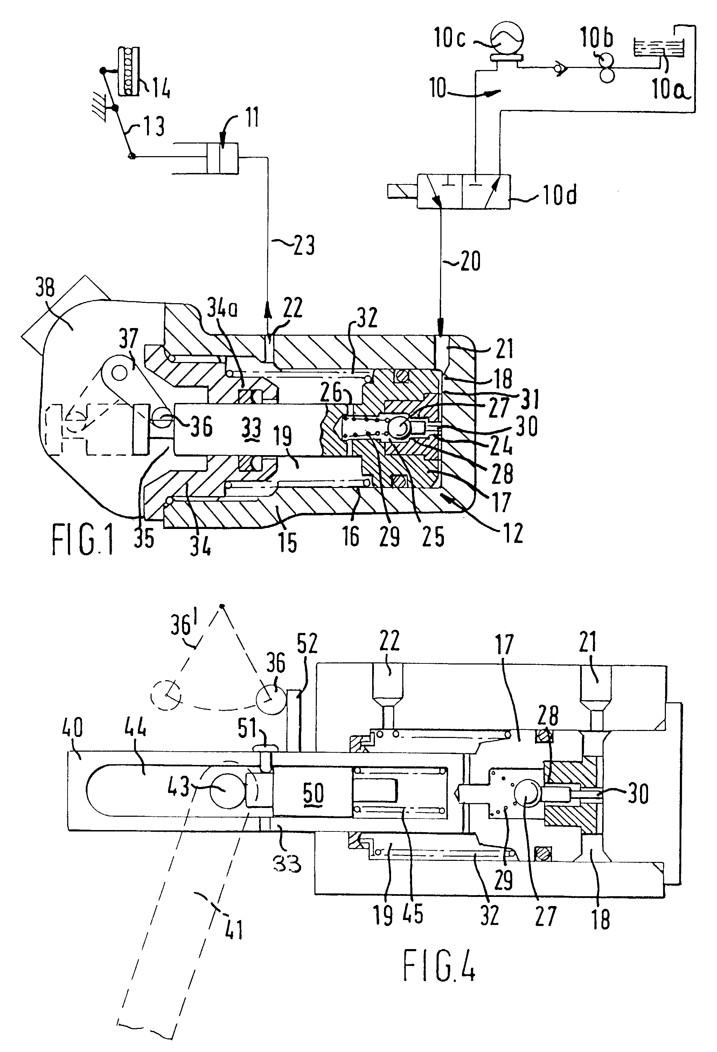

Referring to figure 1 this shows a clutch actuation system in accordance with the present invention in which an hydraulic power pack 10 operates a clutch operating slave cylinder 11 via a displacement means in the form of a displacement valve 12. Powerpack 10 includes a fluid reservoir 10a, a pump 10b, an accumulator 10c and a solenoid operator fluid flow control valve 10d. Slave cylinder 11 acts on a clutch actuating lever 13 which in turn acts on a clutch release bearing 14.

Displacement valve 12 comprises a housing 15 having a bore 16 in which a piston 17 is axially slideable. Piston 17 divides the bore 16 into two fluid-tight chambers 18 and 19 on opposite sides of the piston. Chamber 18 is connected with the powerpack 10 via line 20 and inlet port 21, and chamber 19 is connected with slave cylinder 11 via outlet port 22 and line 23.

Piston 17 includes a passageway 24, 25, 26 through which fluid can pass from chamber 18 to chamber 19. The flow of fluid through this passageway is controlled by a ball valve 27 which is biased into contact with a valve seat 28 by a spring 29. When the piston 17 is in its fully retracted position shown in figure 1, ball valve 27 is unseated by a pin member 30 which is held captive within the piston and which abuts the end wall 31 of bore 16 when the piston is fully retracted. Piston 17 is biased towards its fully retracted position by compression spring 32.

Extending from piston 17 is a rod 33 which exits from the housing 15 via seals 34a carried by a screwthreaded end plug 34. Rod 33 is provided with a circumferentially extending groove 35 which is engaged by a pin 36 on an arm 37 of a rotary potentiometer 38 which is secured to the valve housing 15. Thus when piston 17 is displaced in bore 16 this moves rod 33 which in turn rotates the arm 37 of the potentiometer 38 to provide a potentiometer output proportional to the displacement of the piston 17.

The clutch actuating system described above operates as follows. To disengage the clutch, solenoid valve 10d is operated to connect pressurised fluid from accumulator 10c to line 20 which is fed to the inlet port 21 of the displacement valve 12. Initially the piston 17 is in the fully retracted position shown in figure 1 so that ball valve 27 is open.

Since both chambers 18 and 19 are subjected to the inlet pressure this pressure effectively acts on an end area of the piston 17 of a diameter equal to the external diameter of rod 33. This pressure is designed to displace piston 17 to the left, as viewed in figure 1, against the action of spring 32.

This causes the ball valve 27 to seat so that the inlet pressure then acts on the entire end of piston 17. The valve is designed so that the level of pressure necessary to move piston 17 to seat ball valve 27 against the action of spring 32 is very low and is insufficient to cause any actuating movement of the slave cylinder 11 which is connected to the hydraulic chamber 19. As the pressure in chamber 17 rises further, piston 17 is displaced axially along the bore 16 to expel fluid from chamber 19 and thus operate slave cylinder 11.

Due to the differential areas of chambers 18 and 19 the pressure in chamber 19 will be higher than that in chamber 18 and will thus help the spring 29 to maintain the ball valve 27 seated during operation of the displacement valve.

The connection of accumulator 10c to inlet port 21 causes axial displacement of piston 17 which in turn operates the slave 11 to disengage the clutch. The axial displacement of piston 17 which is proportional to the level of disengagement with the clutch is measured by potentiometer 38. Any movement of potentiometer 38 as a result of the initial movements of piston 17 necessary to seat ball valve 27 can be disregarded by any control system connected with potentiometer 38 so that the output of potentiometer 38 is a signal directly proportional to the state of engagement of the associated clutch.

A further advantage of the displacement valve construction is that once the ball valve 27 is seated the chambers 18 and 19 are isolated from each other so that the pressure levels generated in associated lines 20 and 23 are not communicated. It is therefore possible by suitable dimensioning of the piston 17, bore 16 and the diameter of rod 33 to adjust the pressures generated in the lines 20 and 23 to the level appropriate to the associated master and slave cylinders. Thus a master cylinder can be teamed with a slave cylinder for which its output pressure is not normally suitable by appropriate design of the intermediate displacement valve.

In addition to the operation of a clutch, the displacement valve 12 can also be used as part of a throttle closing mechanism which is used to reduce throttle openings during gear changing in semi-automatic transmissions of the type referred to above.

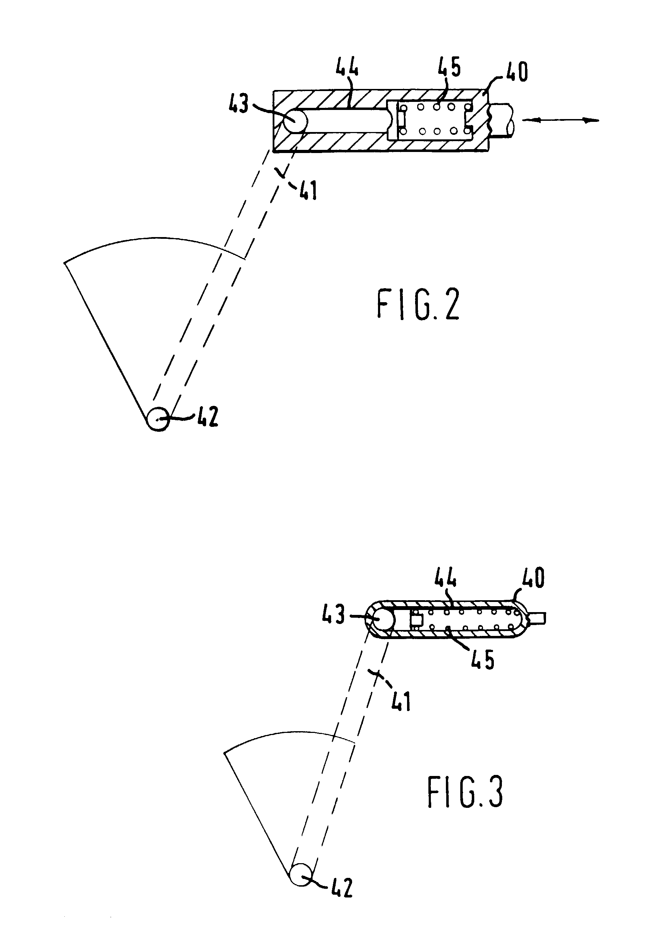

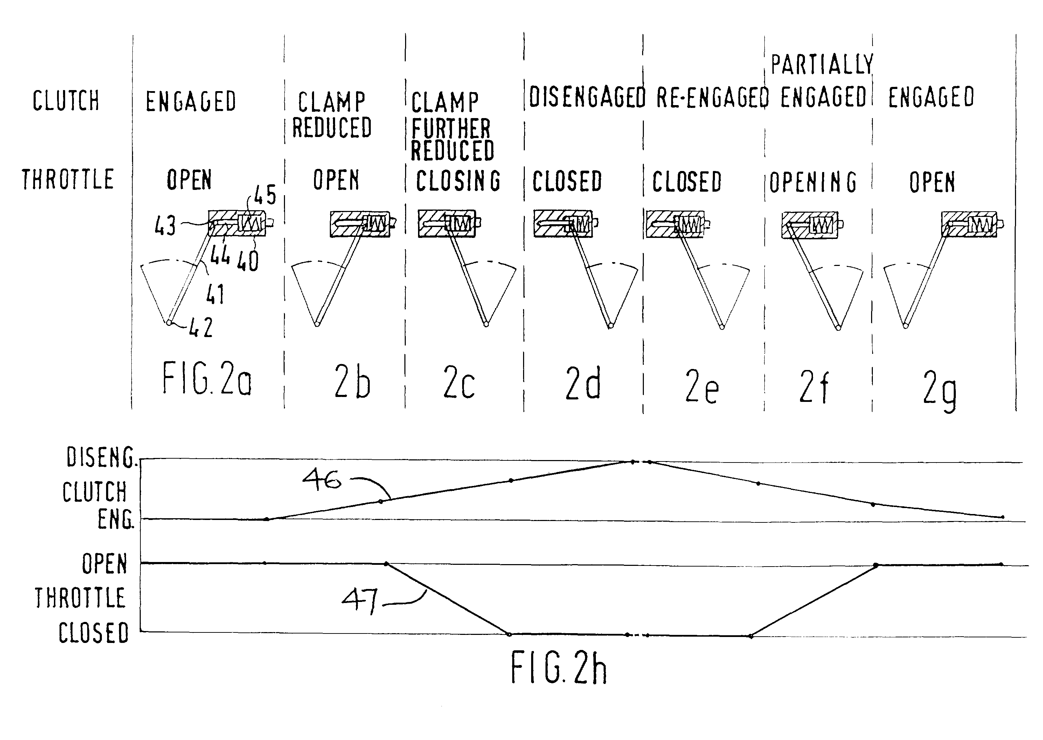

Figure 2 shows in diagrammatic form part of a throttle closing mechanism which comprises a first linkage member 40 which is connected with the clutch operating mechanism and a second linkage member 41 which is connected with a throttle valve operating mechanism via a spindle 42. Second linkage member 41 is held in whatever position it is set by member 40 by a friction clamping arrangement (not shown) which may, for example, be associated with spindle 42. The first and second members are interconnected via a lost motion connection in the form of a pin 43 on linkage member 41 which engages in a slot 44 in linkage member 40. A compression spring 45 is disposed within and partially fills the slot 44 to co-operate with the pin 43 as will be described below.

Figures 2a to 2h show various stages in the disengagement and re-engagement of a clutch and the opening and closing of an associated throttle by a mechanism of the form described above.

At figure 2a the mechanism is shown with the clutch engaged and the throttle open. At figure 2b the clutch clamping load has begun to reduce, thus displacing link 40 to the left from the figure 2a position whilst the throttle control link 41 still remains in the open position. As the linkage moves from the figure 2a to the figure 2b position the lost motion between the pin 43 and the compression spring 45 is taken up so that although the linkage member 40 connected to the clutch operating mechanism moves to the left there is no leftward movement of the pin 43.

At figure 2c the pin 43 is moved to the left by the further reduction in the clutch clamp load. This begins the compression of spring 45 and moves the throttle control linkage 41 in an anti-clockwise tense about spindle 43 thus closing the associated vehicle throttle valve.

At figure 2d the disengagement of the clutch is fully completed by additional compression of spring 45 whilst the throttle control linkage 41 is held in the closed position by friction clamping acting about spindle 42.

At figure 2e re-engagement of the clutch has commenced with the movement of linkage member 40 to the right as viewed in figure 2. This partially releases the compression of spring 45 whilst maintaining the throttle control linkage 41 held in the closed position.

At figure 2f the clutch has been further engaged so that the spring 45 is no longer compressed and the pin 43 has now taken up all the lost motion in the connection so that the pin occupies the extreme left hand end of slot 44 with the throttle valve just beginning to open.

At figure 2g the clutch is now fully re-engaged and the linkage member 40 has drawn the throttle linkage member 45 in an anti-clockwise sense about spindle 42 thus re-opening the throttle valve.

The various states of clutch disengagement and re-engagement and the throttle opening and closure are shown graphically in figure 2h with curve 46 representing the state of engagement of the clutch and curve 47 representing the throttle opening position.

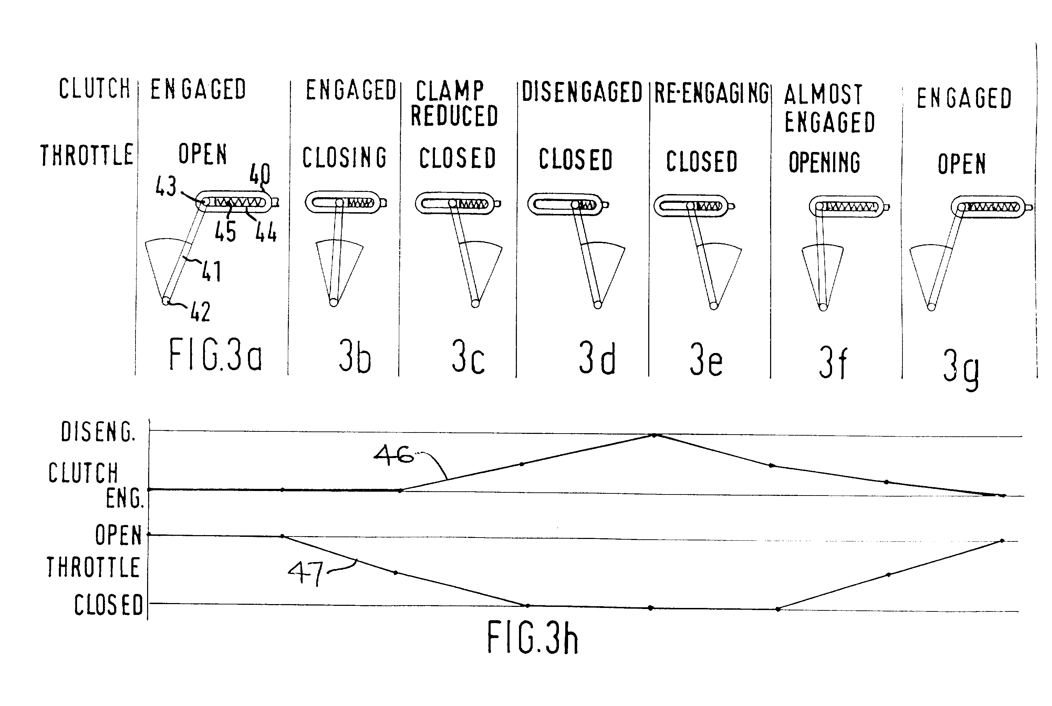

Figure 3 shows a similar form of clutch and throttle operating linkage in which the spring 45 occupies the entire length of slot 44 so that at figure 3b reduction of the throttle setting begins earlier as a result of the immediate compression of spring 45 as soon as the linkage member 40 connected with the clutch operating mechanism begins to move. Again figure 3h shows the clutch engagement and throttle opening positions for each of the stages in the disengagement and re-engagement of the clutch.

A clutch operating and throttle closing mechanism of the form described above in relation to figure 2 or figure 3 can conveniently be combined with a displacement valve 12 of the form shown in figure 1.

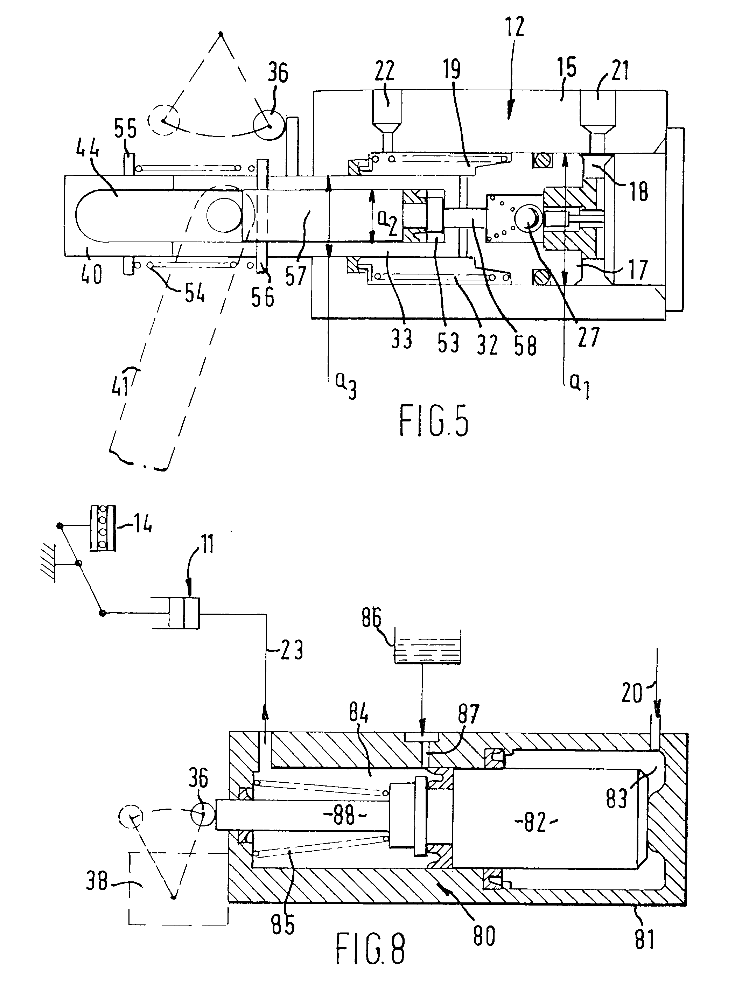

Figure 4 shows such a valve in which the rod 33 operates as the linkage member 40 which includes a slot 44 engaged by the pin 43 associated with the throttle control linkage 41. A compression spring 45 within slot 44 is acted upon for the right hand part of the travel of pin 43 via a plunger 50 whose travel to the left in slot 44 is limited by a pin 51.

A flange 52 on linkage member 40 is contacted by the roller or pin 36 of the associated rotary potentiometer whose arc of movement is indicated by dotted detail 36'.

The remainder of the construction shown in figure 4 is operationally as described previously with reference to figure 1 and will not therefore be described again. The clutch and throttle operating mechanism operates as described with relation to figures 2a to 2h described above.

Figure 5 shows a modified form of the arrangement shown in figure 4 in which a light spring 54 acts between an abutment 55 on the outside of member 40 and a crosspin 56 which extends through an internal piston 57 which defines a chamber 53 within rod 33 which communicates with hydraulic chamber 19 via drilling 58.

In the arrangement shown in figure 5, the position of piston 57 within member 40, and thus the amount of lost motion in the mechanism, is dependent on springs 32 and 54 and the ratio between the pressure areas al,a2 and a3. Thus the phase relationship between the movement of linkage members 40 and 41 can be varied by suitable choice of springs 32, 54 and areas al,a2,a3. The device shown in figure 5 again operates essentially as previously described with reference to figures 3a to 3h.

The device shown in Figure 4 can be made to reduce the throttle setting earlier by arranging the ball valve 27 to have a long cut-off travel so that piston 17 and rod 40 are moved to the left further (as viewed in Figure 4) before the ball valve 27 seats thus advancing the moment at which plunger 50 is effective to operate member 41.

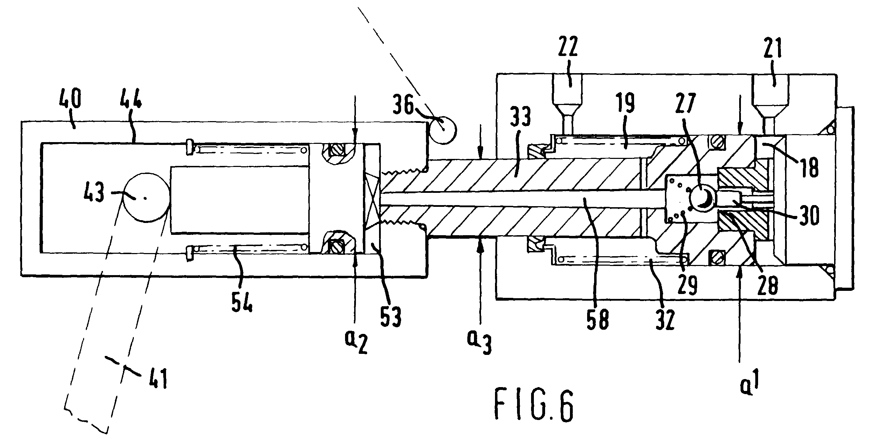

Figure 6 shows a further form of the device shown in figure 5 in which the linkage member 40 is not formed within rod 33 but in an extension thereof. This mechanism although functionally identical to that shown in figure 5 is somewhat more bulky and cumbersome. Again the spring effect is dependent on the level of pressure within chamber 53 which is connected to chamber 19 by drilling 58. Those components in figure 6 whose function is equivalent to those shown in figure 5 have been similarly numbered.

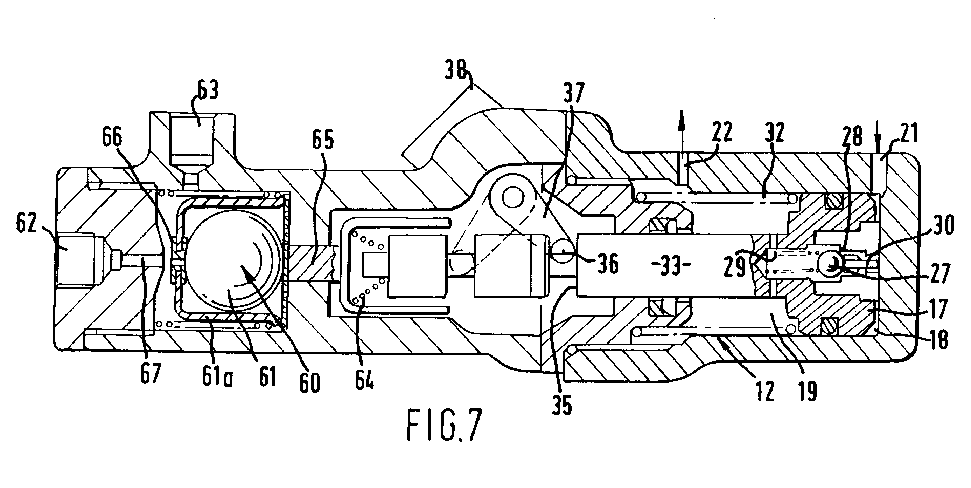

Yet a further form of the present invention is shown in figure 7 in which the displacement valve 12 of figure 1 is connected with a hill holding valve 60 of the same general form of that described in the Applicants earlier pending patent application No. WO93/16903.

The hill holding valve 60 essentially comprises a ball valve member 61 within a cage 61a which can be actuated to close off communication between an inlet port 62 and an outlet port 63 which are plumbed into the brake system of the associated vehicle. Thus when the clutch begins to be disengaged and the rod 33 begins to move to the left this operates via spring 64 on a pin member 65 which displaces cage 61a to bring an annular seal 66 on the cage into contact around a port 67 connected to inlet 62. If the vehicle is on a hill, ball valve 61 will then roll into contact with seal 66 thus cutting off communication between inlet 62 and outlet 63 and holding any pressure in the brake system on the outlet side of ball valve 61.

This hill holder valve 60 thus ensures that when the clutch is disengaged on a hill any brake pressure generated by application of the brake is retained by the ball valve 61 so that the vehicle operator can remove his foot from the brake pedal to operate the accelerator without risk of rolling backwards.

It will be appreciated that the hill holder arrangement shown in figure 7 could also be combined with the clutch operating arrangements shown in figures 2 to 6 to provide an arrangement in which the clutch, throttle and hill holder are all operated from the displacement valve.

Also, the clutch and throttle operating linkages diagrammatically illustrated in figures 2 and 3 can be used with the linkage member 40 operated by a device other than the displacement valve arrangements of the present invention.

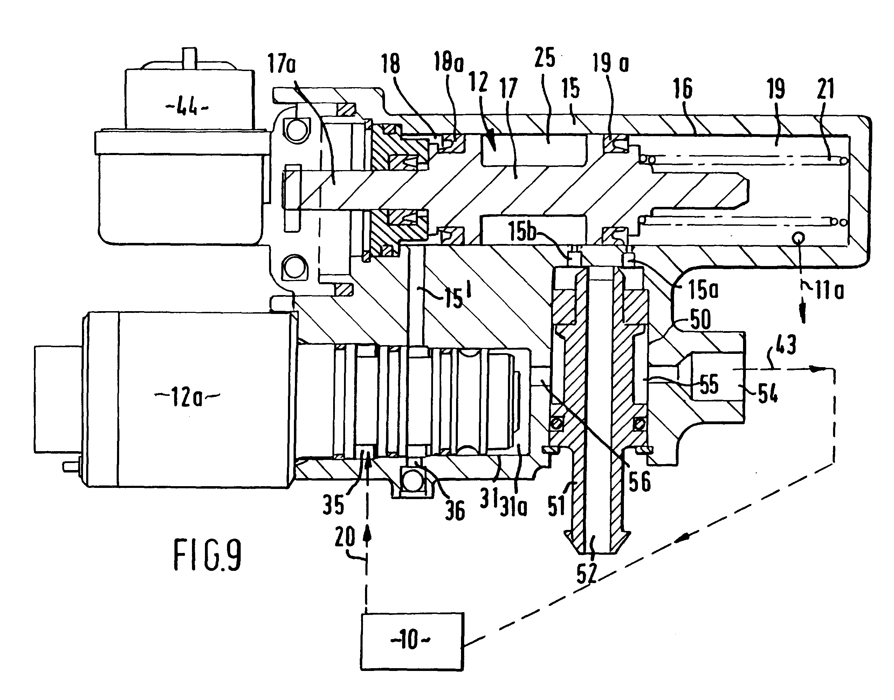

Figure 8 shows a simplified form of hydraulic displacement means 80 which can be used in place of the various forms of displacement valve 12 described above. Displacement means 80 comprises a housing 81 within which a piston 82 is slideable to define two chambers 83 and 84 on opposite sides of the piston. Chamber 83 is connected with powerpack 10 and chamber 84 with slave cylinder 11.

Piston 82 is biased to its retracted position (shown in Fig 8) by a compression spring 85. When in its retracted position chamber 84 communicates with a reservoir 86 via a recuperation port 87. A rod 88 extends from piston 82 down chamber 84 and exits from the housing where it is contacted by pin 36 of potentiometer 38.

When chamber 83 is pressurised by the powerpack, piston 82 is displaced to the left and expels fluid from chamber 84 to operate slave cylinder 11. The movement of piston 82 is communicated to potentiometer 38 via rod 88.

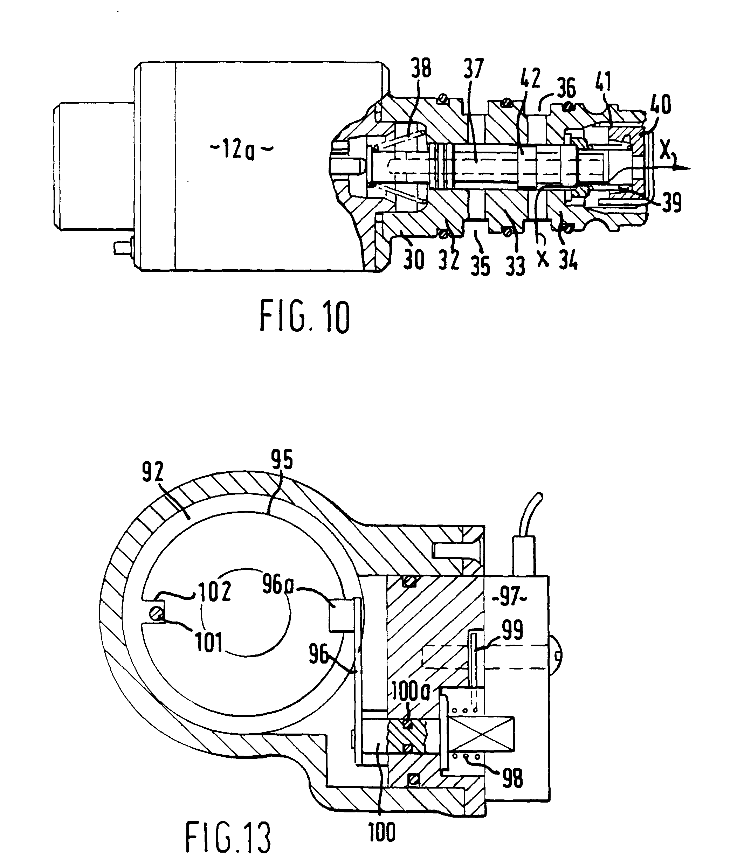

Figures 9 and 10 show a displacement means in the form of an actuator 12 which is supplied with pressurised hydraulic fluid from a power pack 10 via a line 20. As in previously described arrangements the actuator is connected with a slave cylinder 11 by a line 11a. Slave cylinder 11 operates a clutch release bearing 14 via a lever 13. A solenoid-operated fluid flow control valve 12a controls the flow of pressurised fluid to and exhaust of pressurised fluid from the actuator 12.

The actuator 12 again comprises a piston 17 which slides in a bore 16 of housing 15 and which divides the bore into two fluid type chambers 18 and 19 using seals 18a and 19a respectively. Between the seals there is provided a space 25 which is filled with hydraulic fluid.

Piston 17 is biased to its clutch engaged position by return spring 21 and is connected with rotary potentiometer 44 at its end 17a.

Housing 15 is provided with recuperation drillings 15a and 15b which communicate with chamber 19 and space 25 respectively and open into a bore 50 provided in housing 15. Within housing bore 50 is retained a spigot 51 having a central drilling 52 which communicates with recuperation drillings 15a and 15b. Spigot 51 is in turn connected by suitable piping to a recuperation reservoir (not shown). Housing 15 also includes a return port 54 which is in communication with an annular chamber 55 which surrounds spigot 51 and which communicates via drilling 56 with the end 31a of the bore which houses the solenoid valve 12a. In this manner the return of fluid from chamber 18 is channeled from chamber 31a via drilling 56, chamber 55, and return port 54 to return line 43 and hence back to power pack 10.

The internal details of solenoid valve 12a are shown in more detail in figure 10 from which it can be seen that an outer portion 30 of the valve is inserted into a bore 31 of the housing 15 and remains stationary therein. The outer portion 30 includes lands 32,33 and 34 which make sealed contact with the bore 31 to define annular feed passages 35 and 36 which are connected with power pack 10 and chamber 18 (via drilling 15') respectively.

Within outer portion 30 of solenoid valve 12a is disposed an axially movable landed spool 37 which, when the solenoid valve 12a is not actuated, is maintained in the position shown in figure 10 by return springs 38 and 39 respectively. Return spring 39 reacts against a threaded nut 40 whose axial position within a threaded bore 41 controls the spring loading on spool 37 as described in the applicants UK patent no 2 277 367.

With the spool 37 in the figure 10 position, spool land 42 cuts off communication between annular feed passage 35 and passage 36 connected with chamber 18 so that chamber 18 is not pressurised by the power pack 10. In this spool position feed passage 36 communicates with the end chamber 31a of bore 31 by the path X shown in figure 10. Chamber 31a is connected with a return line 43 which feeds fluid back to power pack 10.

Axial movement of piston 17 is communicated to a sensor 44 in the form of a rotary potentiometer via a pin 43 which extends through an actuating arm (not shown) of the potentiometer and the end 17a of the piston. Thus axial movement of piston 17 caused by variation of the hydraulic pressure in chamber 18 results in rotation of the potentiometer actuating arm thus giving a corresponding signal indicative of the position of piston 17 and hence the position of the associated clutch release bearing 14.

With the solenoid valve 12a in the non-actuating position shown in figure 10, the chamber 18 is connected with return line 43 via path X as described above so that the clutch operated by release bearing 14 is engaged. To dis-engage the clutch solenoid valve 12a is actuated to disconnect chamber 18 from return line 43 and connect this chamber with power pack 10 via grooves 35 and 36 as described above. This connection of chamber 18 with power pack 10 results in displacement of piston 17 to the right, as viewed in figure 9, which in turn displaces fluid from chamber 19 to operate slave cylinder 11 to disengage the associated clutch via thrust bearing 14.

As previously indicated, this movement of piston 18 results in movement of the actuating arm of rotary potentiometer 44 to provide a signal indicative of the new position of slave 11 and hence the state of disengagement of the associated clutch.

It will be appreciated that the rotary sensor 44 used in Figure 9 and the earlier described displacement means can be replaced by any suitable form of linear sensor if so desired.

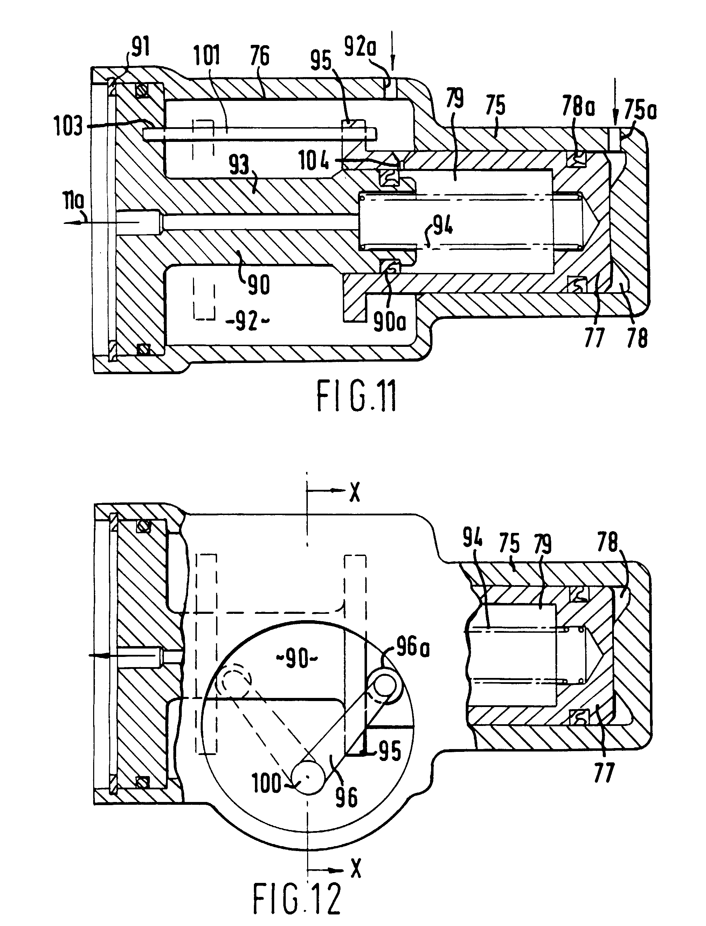

Figures 11 to 13 show an alternative actuator construction which is significantly shorter in axial length. In figure 11, the actuator has a body 75 having a stepped bore 76 within which a piston 77 is slidable. Piston 77 makes sealing contact with bore 76 and also with a fixed piston member 90 which is held in sealing engagement in bore 76 by a circlip 91. Seals 78a and 90a define chambers 78 and 79 and a reservoir 92 which surrounds fixed piston member 90.

Chamber 78 is connected via port 75a with a solenoid control valve (not shown) similar to 12a described above whilst chamber 79 is connected with slave cylinder 11 via drilling 93 which extends down the centre of fixed piston 90. Piston 77 is biased to the position shown in figure 11 by return spring 94. A flange 95 is provided on piston 77 against which a roller 96a carried on an arm 96 of an associated rotary potentiometer 97 acts. A return spring 98 having one end 99 braced against the housing 75 and the other engaging shaft 100 of potentiometer 97 provides the necessary bias force to maintain the roller 96a against flange 95. The exit of shaft 100 through housing 75 is sealed by seal 100a to prevent loss of fluid from reservoir 92. Rotation of piston 77 within bore 76 is prevented by a pin 101 which engages a cut-out 102 in flange 95 and a drilling 103 in fixed piston member 90.

As will be appreciated from the above, when the associated clutch is in an engaged position the piston 77 is as shown in figure 11. To disengage the clutch pressurised fluid is admitted to chamber 78 under the control of the associated solenoid valve, this displaces the piston 77 axially within bore 76 which in turn expels fluid from chamber 79 via drilling 93 to operate slave cylinder 11. A recuperation port 104 is provided in piston 77 through which fluid can replenish chamber 79 when the piston is in the fully retracted position. This replenishing fluid comes from reservoir 92 which surrounds piston member 90. Reservoir 92 may be of sufficient capacity to provide the total replenishment capability for the actuator. Alternatively, an external reservoir (not shown) may be connected with reservoir 92 via port 92a to increase replenishment capacity.

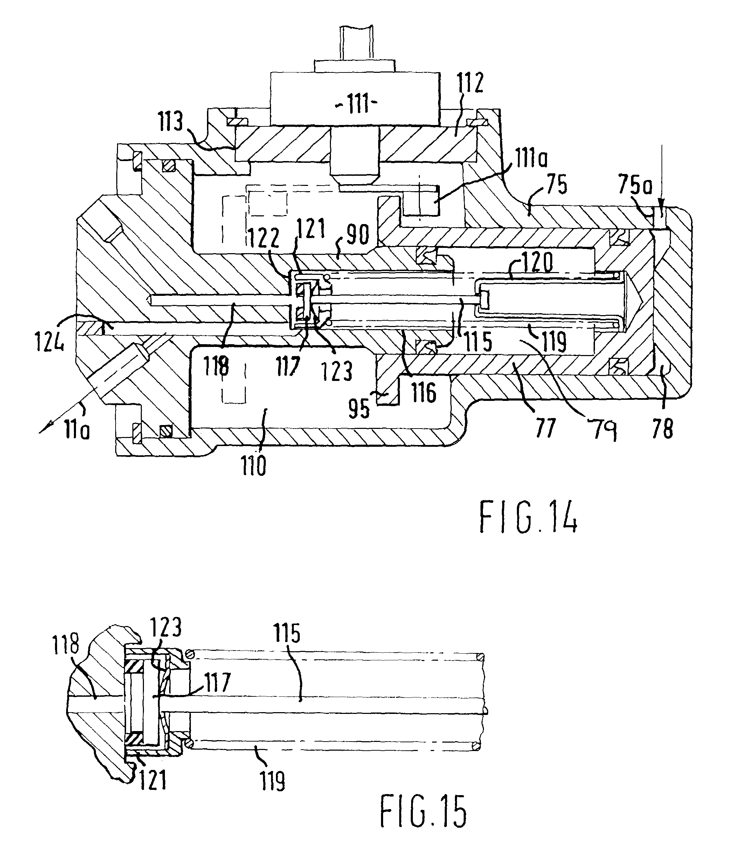

Figure 14 shows a further alternative form of actuator in which a piston 77 again slides within housing 75 over a fixed piston member 90 to define chambers 78 and 79 which are connected with power pack 10 and slave 11 respectively.

In the arrangement shown in figure 14 the flange 95 on piston 77 moves in a chamber 110 which surrounds fixed piston member 90 and which is not filled with hydraulic fluid. This dry chamber 110 is possible because of the alternative replenishing arrangements built into the centre of fixed piston member 90. This means that rotary potentiometer 111 which is supported on a mounting member 112 in a bore 113 of the housing does not require to be sealed against possible fluid ingress. Potentiometer 111 has a roller 111a which contacts flange 95.

The replenishing arrangments for chamber 79, part of which are shown on a larger scale in Figure 15, are as follows. A valve member 115 extends within a bore 116 in fixed piston member 90 and has a head 117 which is capable of co-operating with and closing off a replenishing port 118 connected with a replenishing reservoir (not shown). When the actuator is in the clutch engaged position shown in figure 14, valve member 115 is biased out of contact with the end of replenishing port 118 by a return spring 119 which not only acts on piston 77 but also on valve member 115 via a spring cup member 120. Surrounding the head 117 of valve member 115 is a further spring cup 121 which is maintained in contact with the end 122 of drilling 116 by spring 119.

Between head 117 and cup 121 is a leaf spring member 123 which is maintained in a compressed condition when the clutch is engaged and the piston 77 is in the position shown in figure 14 in which port 118 is open.

When it is desired to disengage the clutch, fluid pressure is admitted to chamber 78 which in turn displaces piston 77 and expels fluid from chamber 79 to the slave 11 via outlet 124. The initial movement of piston 77 to the left as viewed in figure 14 relaxes the force applied to valve member 115 via cup 120 sufficiently to allow the leaf spring member 123 to displace the valve head 117 to the left relative to cup 121 sufficiently to close off the replenishing port 118 (see Fig 15) so that the fluid expelled from chamber 79 leaves the actuator via drilling 116 and outlet 124.

The arrangement described above with reference to Figures 9 and 10 suffers from a number of shortcomings, in particular that the actuator cannot begin to generate pressure to operate the slave 11 until the communication with the reservoir via port 15a is cut-off and this cannot occur until significant axial displacement of piston 17 has occurred. Also, there is a time delay between the operation of solenoid valve 12a and the commencement of the movement of piston 17. These two factors combine to produce a relatively slow response in the operation of slave 11 and also extend the necessary axial length of the actuator 12 due to the movement necessary to cut-off the recuperation flow to chamber 19.

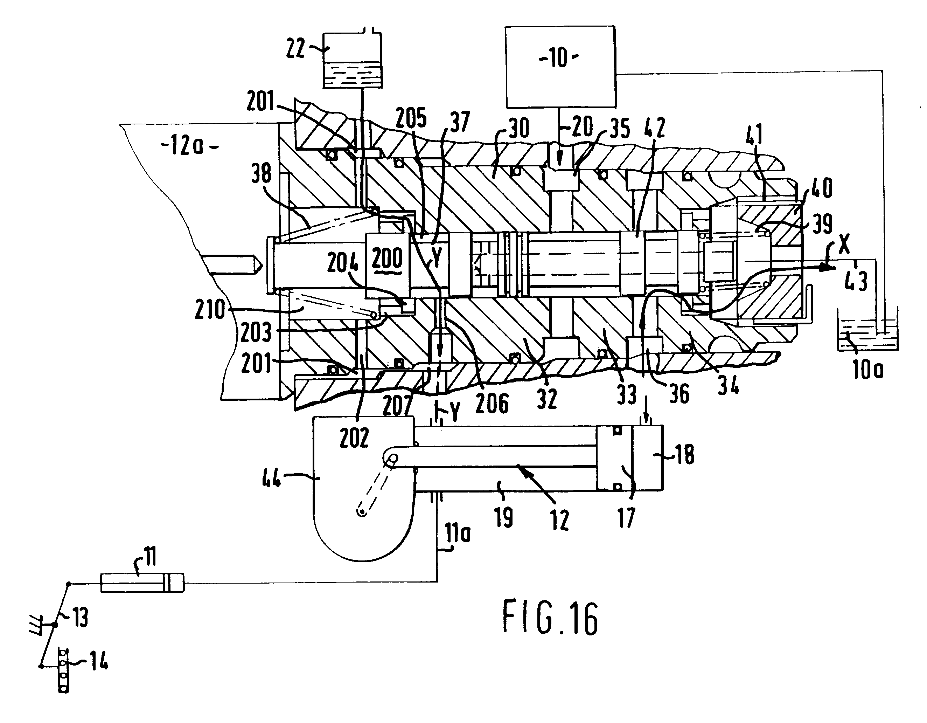

Figure 16 discloses an improved arrangement in which the cut-off in communication between the recuperation reservoir 22 and the chamber 19 is effected by the provision of an extra land 200 on the spool 37 of the solenoid-operated valve 12a.

With the solenoid valve in the deactivated position shown in figure 16, chamber 19 of actuator 12 is connected with reservoir 22 via an annular groove 201, radial drillings 202, chamber 210, axial drillings 203, groove 204, spool wasted portion 205, drilling 206 and annular groove 207. This recuperation communication is indicated by arrow Y in figure 16.

Also with the solenoid spool in the figure 16 position the powerpack 10, which is connected with feed passage 35, is isolated by land 42 from chamber 18 which is connected with feed passage 36. Chamber 18 is connected with reservoir 10a of powerpack 10 via a path X so that chamber 18 is not pressurised.

When solenoid valve 12a is operated to initiate movement of actuator 12, the initial movement of the spool 37 of the valve causes land 200 to close-off recuperation path Y so that pressurisation can immediately begin to build up in chamber 19 which is in communication with slave 11. Further movement of the solenoid spool 37 causes land 42 to close-off return path X and connect feed passage 35 with feed passage 36 thus commencing presurisation of chamber 18.

As in the previous constructions, described pressurisation of chamber 18 displaces piston 17 which in turn operates slave 11. An indication as to the axial position of piston 17 and hence the position of the clutch release bearing 14 operated by slave 11 is given by a sensor in the form of a rotary or linear potentiometer 44 which is connected with piston 17.

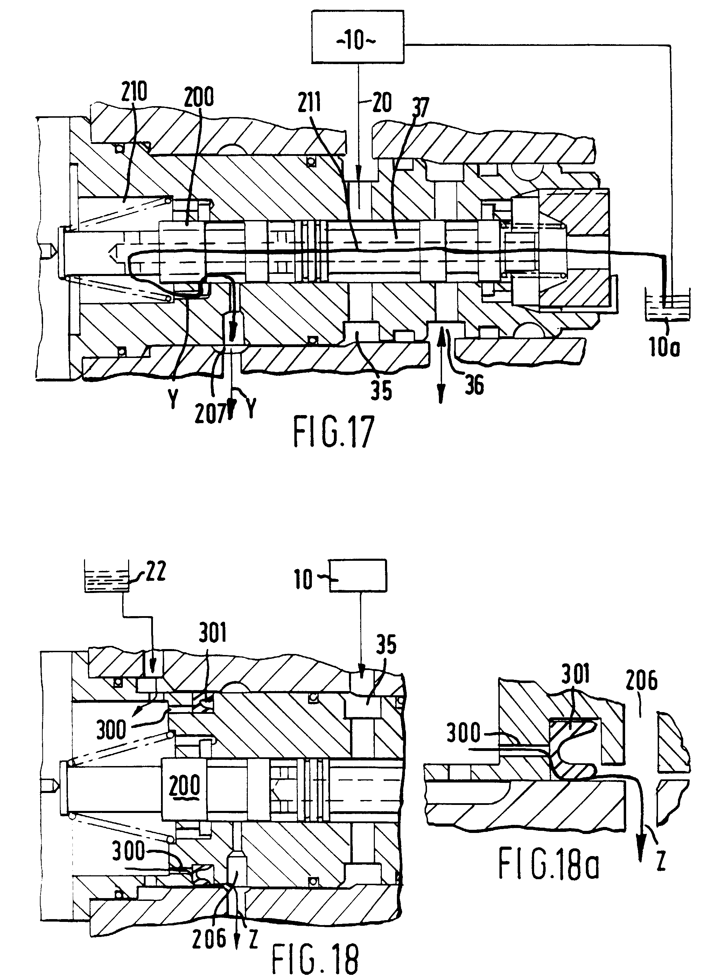

Figure 17 shows part of a similar arrangement to figure 16 but with the separate recuperation reservoir 22 deleted and the chamber 210 to which the separate reservoir 22 was previously connected being connected with the powerpack reservoir 10a via a drilling 211 down the centre of valve spool 37. Thus, as in the figure 16 construction, the recuperation path Y is open when the solenoid is deactivated and is immediately closed on initial movement if the spool 37 as described above. The other constructional details of the figure 17 construction are the same as those of figure 16.

Figures 18 and 18a show part of an actuator of the form shown in figure 16 with the addition of anti-cavitation passages 300 controlled by seal 301 which allow fluid to be drawn past seal 301 into chamber 19 via path Z in the event of rapid return of piston 17 thus helping to reduce the likelihood of cavitation occurring in chamber 19 or the connection with slave 11. It will be appreciated that the anti-cavitation feature described above in relation to figure 18 & 18a can also be used in a single reservoir arrangement of the form shown in figure 17.

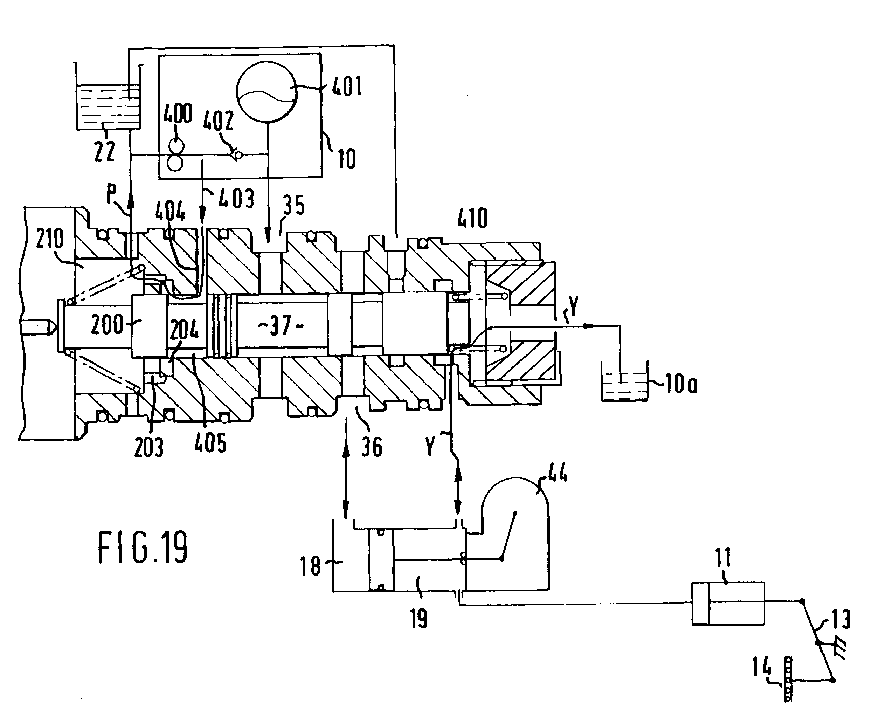

Figure 19 shows a similar arrangement to figure 16 in which the powerpack 10 includes an electrically driven pump 400 which draws fluid from reservoir 22 and charges an accumulator 401 via a non-return valve 402. The output from the pump 400 is fed via line 403 and drilling 404 to a wasted portion 405 of spool 37 and hence via groove 204 and drillings 203 into chamber 210 from whence the fluid returns to reservoir 22. Thus, with the solenoid of valve 12a deactivated and the spool 37 in the position shown in figure 19 the pump output is dumped back directly to reservoir 22 via path P. Also any pressure on the pump side of non-return valve 402 is similarly relieved.

When the accumulator 401 is fully charged the pump 400 can be switched off and the spool 37 returned to its deactivated position if no supply or exhaust of fluid is necessary from slave 11.

The above dumping flow path P has the advantage that on pump start-up the pump is not required to get up to speed against a high pump load since the fluid being pumped is returned directly to the reservoir 22 via path P. Also the lines connecting the pump 400 with the accumulator 401 can be kept at a relatively low pressure since they are connected to reservoir 22 when the solenoid is deactivated thus extending the life of the lines and the general reliability of the system.

Also in figure 19 the landing arrangement of spool 37 is changed so that the recuperation path Y to chamber 19 is provided at the other end of the spool under the control of spool land 410. This enables the length of spool 37 and hence the entire valve to be reduced.

On the initial movement of spool 37 the dumping path P is closed off by land 200 and land 410 closes off the recuperation passage Y to chamber 19 from reservoir 10a.

## Claims

1. An actuation system comprising a source of pressurised fluid (10) which actuates a slave cylinder (11) at a first location via a fluid flow path (20,23), the system being characterised by the provision of a displacement means (12) in said fluid flow path, said displacement means (10) being at a second location remote from the slave cylinder (11) and including a component (17) which is displaced by the pressurised fluid from the source (10) to provide a displacement proportional to the actuating movement of the slave cylinder (11) caused by the pressurised fluid, and sensing means (38) at the second location operable to measure said displacement to indicate the actuating movement of the slave cylinder (11) at the first location.

2. A system according to claim 1 characterised in that the displacement means comprises a piston (17) axially slideable in a bore (16) of a housing (15) to define two fluid tight chambers (18,19) one on each side of the piston, one chamber (19) being connected with the slave cylinder (11) and the other chamber (18) being connected with the source of pressurised fluid (10), and a displacement member (37) which moves with the piston (17) and extends outside the housing for co-operation with the sensing means (38).

3. A system according to Claim 2 characterised in that the displacement means is in the form of a displacement valve (12) with a passage (24, 25, 26) interconnecting said chambers (18,19) on each side of the piston (17), and a valve means (27) disposed in said passage to cut off or control the passage of fluid between said chambers and hence between said source (10) and slave cylinder (11), said valve means (27) being arranged to be open when said piston (17) is in a retracted condition in which said other chamber (18)is at a minimum volume and said slave cylinder (11) is not operated, and said valve means (27) being arranged to close as said piston (17) is displaced along said bore (16) against a bias force (32) in response to a rise in the pressure of said pressurised fluid thus raising the pressure level in said one chamber (19) to cause actuating movement of the slave cylinder (11) proportional to the movement of said piston (17).

4. A system according to Claim 3 characterised in that the valve means (27) which controls the passage of actuating fluid between the two chambers (18, 19) comprises a check valve (27) which is spring-loaded (29) to a normally closed condition, said check valve being opened when said piston (17) is in its retracted condition by pin means (30) which contacts an end of the bore (16) and unseats the check valve (27).

5. A system according to Claim 2 characterised in that the said one chamber (19) communicates with a reservoir (10c) when the piston is in a retracted condition and said other chamber (18) is at a minimum volume, said communication with the reservoir closing as said piston (17) is displaced along said bore (16) in response to a rise in the pressure in said other chamber (18) thus raising the pressure level in said one chamber (19) to cause actuating movement of the slave cylinder (11) proportional to the movement of said piston (17).

6. A system according to any one of claims 2 to 5 characterised in that the piston (17) has two axially spaced seals (18a,19a) thereon which seal said one (19) and other (18) chambers and which define a fluid containing chamber (25) between said axially spaced seals, the fluid containing chamber (25) also communicating (52) with the reservoir in the retracted condition of the piston (17) and being closed off from the reservoir as said piston is displaced along said bore (16).

7. A system according to Claim 2 characterised in that the piston (77) also slides in sealed contact over an inner fixed piston member (90) to define said one chamber (79) between the slidable piston and the inner piston (90) and the other chamber (78) between the slidable piston (77) and housing bore (76).

8. A system according to Claim 7 characterised in that a reservoir (92) surrounds said fixed inner piston member (90) and a recuperation port (104) is provided in the slidable piston (77) which allows communication between said one chamber (79) and the reservoir (92) when the slidable piston (77) in its retracted condition and the other chamber (78) is at its minimum volume.

9. A system according to claims 7 characterised in that the fixed piston member (90) includes a replenishment passage (118) which communicates with said one chamber (79), flow of fluid through the replenishment passage being controlled by a valve member (115) which is held open by resilient means (119) when the slidable piston (77) is in its retracted condition in which the other chamber (78) is at its minimum volume and which is closed by initial movement of the slidable piston (72) on pressurisation of said other chamber (78).

10. A system according to claim 2 characterised in that the supply of pressurised fluid to and exhaust of fluid from said other chamber (18) is controlled by axial displacement of a spool (37) of a solenoid operated spool valve (12a) which also controls the connection of a recouperation port (Y) of said one chamber (19) with a reservoir (22).

11. A system according to claim 10 characterised in that initial axial displacement of the spool (37) to pressurise said other chamber (18) also cuts off communication (Y) between the recouperation port and said one chamber (19).

12. A system according to claim 10 or 11 characterised in that the reservoir (10) which communicates with the recouperation port also receives the fluid which is exhausted from said other chamber (18).

13. A system according to any one of claims 10 to 12 characterised in that an anti-cavitation feature (300) is provided under which the piston can draw fluid (Z) into said one chamber (19) around seals (301) in the solenoid operated spool valve on rapid return of the piston towards its retracted condition.

14. A system according to any one of claims 10 to 13 characterised in that the source of pressurised fluid (10) is provided by a pump and the spool (37) of the solenoid operated valve (12a) is also arranged to dump (X) the output of the pump to a sump (10a) when the other chamber (18) is not pressurised, this dump path (X) being cut-off on movement of the spool (32) to begin pressurisation of the other chamber (18).

15. A system according to any one of claims 2 to 14 characterised in that a rod (33) extends from one side of the piston (17) along said bore (16) and exits from said housing (15), and sensing means in the form of a transducer (38) is connected (37) with said rod (33) to provide a signal output representative of the actuating movement of the slave cylinder (11).

16. A system according to any one of claims 1 to 15 characterised in that the displacement means (12) is located remote from the slave cylinder (11)

17. A system according to claim 16 characterised in that the displacement means (12) is adjacent the source of pressurised fluid (10).

18. A system according to claim 16 characterised in that the source of pressurised fluid comprises an hydraulic powerpack (10), including an hydraulic reservoir (10a), pump (10b) and accumulator (10c), said displacement means (12) also being part of said powerpack.

19. A system according to any one of claims 2 to 18 characterised in that a rod (40) extends from one side of the piston (17) along said bore (16) and exits from said housing (15), said rod comprising a first linkage member (40) of a mechanism for interconnecting the operation of a vehicle clutch and throttle, the first linkage member (40) being movable in a first direction in response to disengagement of the clutch and in a second direction in response to engagement of the clutch, the mechanism also including a second linkage member (40) connected with the vehicle throttle and movable in said first direction to close the throttle and in said second direction to open the throttle, and a lost motion connection (43, 44) connecting the first and second linkage members (40, 41), said lost-motion connection allowing initial movement of the first linkage member (40) in the first and second directions without any corresponding movement of the second linkage member (41) in said first and second directions.

20. A system according to claim 19 characterised in that the lost motion connection (43, 44) includes a resilient means (45) providing the force transmitting path between the first and second linkage members (40, 41) for movement of the second linkage member (41) in said first direction by the first linkage member (40).

21. A system according to claims 19 or 20 characterised in that the resilient means is provided by a second piston (57) within the rod (40) or an extension thereof which is operatively connected with the second linkage member (41) and is biased in said first direction by spring means.

22. A system according to claim 21 characterised in that the spring means is a fixed rate spring (45) which provides a fixed phase relationship between the movement of the first (40) and second (41) linkage members in said first direction.

23. A system according to claim 21 characterised in that the second piston (57) defines a chamber (53) within the rod (40) which is connected with said one chamber (19) to allow movement of the second piston within the rod dependent on the level of pressure in said one chamber to enable the phase relationship between the movement of the first (40) and second (41) linkage members in said first direction to be varied.

24. A system according to any one of claims 19 to 23 characterised in that the rod (33) also operates a hill holder valve (60) in an associated vehicle braking system.

25. A system according to any one of claims 1 to 24 characterised in that the slave cylinder (11) operates a vehicle clutch (14).

26. A displacement valve (12) for use in an hydraulic actuation system according to any one of claims 1 to 25, said displacement valve being characterised by comprising a housing (15) with a piston (17) slidable in a bore (16) of the housing to define two fluid tight chambers (18, 19) one on each side of the piston, one chamber (19) being connected with the slave cylinder (11) and the other chamber (18) being connected with the source of pressurised fluid (10), a passage (24, 25, 26) interconnecting said chambers, and a valve means (27) disposed in said passage to cut-off or control the passage of fluid between said chambers and hence between said source and slave cylinder, said valve means (27) being arranged to be open when said piston (17) is in a retracted condition in which said other chamber (18) is at a minimum volume and said slave cylinder (11) is not operated and said valve means (27) being arranged to close as said piston (17) is displaced along said bore (16) against a bias force (32) in response to a rise in said pressurised fluid thus raising the pressure level in said one chamber (19) to cause actuating movement of the slave cylinder (11) proportional to the movement of said piston (17).

## Patentansprüche

1. Ein Betätigungssystem, zu dem eine Förderquelle (10) für ein unter Druck stehendes Fluid gehört, mit welchem über eine Fluidleitung (20, 23) ein Nehmerzylinder (11) an einem ersten Ort beaufschlagt wird, wobei das System dadurch gekennzeichnet ist, daß in besagter Fluidleitung ein Verdrängungsmittel (12) bereitgestellt ist und besagtes Verdrängungsmittel (12) an einem zweiten Ort entfernt vom Nehmerzylinder (11) angeordnet ist und über ein Bauteil (17) verfügt, welches durch das unter Druck stehende Fluid von der Förderquelle (10) verdrängt wird, um somit eine Verdrängungsbewegung zu liefern, die sich proportional zur durch das unter Druck stehende Fluid ausgelösten Betätigungsbewegung des Nehmerzylinders (11) verhält; desgleichen ist das System dadurch gekennzeichnet, daß am zweiten Ort Nachweismittel (38) vorhanden sind, die dergestalt arbeiten, daß sie die besagte Verdrängungsbewegung messen, um dadurch eine Anzeige für die Betätigungsbewegung des Nehmerzylinders (11) am ersten Ort zu erbringen.

2. Ein System gemäß Anspruch 1, das dadurch charakterisiert ist, daß zum Verdrängungsmittel ein axial in der Bohrung (16) eines Gehäuses (15) verschiebbarer Kolben (17) gehört, durch den zwei flüssigkeitsdicht gegeneinander abgedichtete Kammern (18, 19) beiderseits des Kolbens gebildet werden, wobei die eine Kammer (19) mit dem Nehmerzylinder (11) verbunden ist und die andere Kammer (18) mit der Förderquelle (10) des unter Druck stehenden Fluids, sowie ein Verdrängungsbauteil (37), welches sich mit dem Kolben (17) verschiebt, sich zur Außenseite des Gehäuses hin erstreckt und mit dem Nachweismittel (38) zusammenarbeitet.

3. Ein System gemäß Anspruch 2, das dadurch charakterisiert ist, daß das Verdrängungsmittel die Form eines Verdrängungsventils (12) annimmt und eine Bohrung (24, 25, 26) aufweist, über die die besagten Kammern (18, 19) auf den beiden Seiten des Kolbens (17) miteinander verbunden werden, sowie ein Ventilmittel (27), welches in besagter Bohrung dergestalt angeordnet ist, daß es den Fluidstrom zwischen den besagten Kammern und mithin zwischen besagter Förderquelle (10) und dem Nehmerzylinder (11) unterbricht oder steuert, wobei das besagte Ventilmittel (27) so ausgelegt ist, daß es sich in einer geöffneten Stellung befindet, wenn besagter Kolben (17) in einer zurückgezogenen Stellung steht und besagte andere Kammer (18) nur minimales Fluidvolumen enthält und besagter Nehmerzylinder (11) nicht betätigt wird, und das besagte Ventilmittel (27) gleichfalls so ausgelegt ist, daß es schließt, wenn der besagte Kolben (17) in der besagten Bohrung (16) gegen eine Rückstellkraft (32) unter dem Einfluß eines Druckanstiegs im besagten unter Druck stehenden Fluid verschoben wird, wodurch das Druckniveau in besagter einer Kammer (19) ansteigt und eine Betätigungsbewegung des Nehmerzylinders (11) auslöst, die sich proportional zur Bewegung des besagten Kolbens (17) verhält.

4. Ein System gemäß Anspruch 3, das dadurch charakterisiert ist, daß zum Ventilmittel (27), welches den Strom des Betätigungsfluids zwischen den beiden Kammern (18, 19) steuert, ein Rückschlagventil (27) gehört, welches unter Federdruck (29) normalerweise in einer geschlossenen Stellung gehalten wird, wobei dieses Rückschlagventil öffnet, wenn der besagte Kolben (17) in seiner zurückgezogenen Stellung steht, und zwar durch ein Stifimittel (30), welches ein Ende der Bohrung (16) kontaktiert und das Rückschlagventil (27) von seinem Sitz abhebt.

5. Ein System gemäß Anspruch 2, das dadurch charakterisiert ist, daß besagte eine Kammer (19) mit einem Reservoir (10c) in Verbindung steht, wenn der Kolben in einer zurückgezogenen Stellung steht und die besagte andere Kammer (18) nur minimales Fluidvolumen enthält, wobei besagte Verbindung mit dem Reservoir geschlossen wird, wenn der besagte Kolben (17) in der besagten Bohrung (16) unter dem Einfluß eines Druckanstiegs in besagter anderer Kammer (18) verschoben wird, wodurch das Druckniveau in besagter einer Kammer (19) ansteigt und eine Betätigungsbewegung des Nehmerzylinders (11) auslöst, die sich proportional zur Bewegung des besagten Kolbens (17) verhält.

6. Ein System gemäß einem beliebigen der Ansprüche 2 bis 5, das dadurch charakterisiert ist, daß der Kolben (17) zwei axial voneinander abgesetzt angeordnete Dichtungen (18a, 19a) trägt, die besagte eine (19) und andere (18) Kammer abdichten und eine Fluid enthaltende Kammer (25) zwischen besagten axial voneinander abgesetzt angeordneten Dichtungen definieren, wobei die Fluid enthaltende Kammer (25) auch mit dem Reservoir in der zurückgezogenen Stellung des Kolbens (17) in Verbindung (52) steht und vom Reservoir getrennt ist, wenn besagter Kolben in besagter Bohrung (16) verschoben wird.

7. Ein System gemäß Anspruch 2, das dadurch charakterisiert ist, daß der Kolben (77) auch in abdichtendem Kontakt über ein feststehendes Kolbenbauteil (90) gleitet, um besagte eine Kammer (79) zwischen dem verschiebbar angeordneten Kolben und dem inneren Bauteil (90) und die andere Kammer (78) zwischen dem verschiebbar angeordneten Kolben (77) und der Gehäusebohrung (76) zu definieren.

8. Ein System gemäß Anspruch 7, das dadurch charakterisiert ist, daß ein Reservoir (92) das besagte feststehende innere Kolbenbauteil (90) umgreift und ein Rückbefüllungsanschluß (104) im verschiebbar angeordneten Kolben (77) vorgesehen ist, wodurch eine Verbindung zwischen besagter einer Kammer (79) und dem Reservoir (92) bereitgestellt wird, wenn sich der verschiebbar angeordnete Kolben (77) in seiner zurückgezogenen Stellung befindet und die andere Kammer (78) ein minimales Fluidvolumen enthält.

9. Ein System gemäß Anspruch 7, das dadurch charakterisiert ist, daß ein feststehendes Kolbenbauteil (90) eine Rückbefüllungsbohrung (118) trägt, durch die die Verbindung mit besagter einer Kammer (79) hergestellt wird, wobei der Fluidstrom durch die Rückbefüllungsbohrung von einem Ventilmittel (115) gesteuert wird, welches über elastische Mittel (119) in der geöffneten Stellung gehalten wird, wenn der verschiebbar angeordnete Kolben (77) in seiner zurückgezogenen Stellung steht, in welcher die andere Kammer (78) ein minimales Fluidvolumen enthält, und welches in die geschlossene Stellung gebracht wird durch die anfängliche Bewegung des verschiebbar angeordneten Kolbens (77), wenn in besagter anderer Kammer (78) Druck aufgebaut wird.

10. Ein System gemäß Anspruch 2, das dadurch charakterisiert ist, daß der Zulauf von unter Druck stehendem Fluid zu und der Ablauf aus besagter anderer Kammer (18) durch die axiale Verschiebung eines Schieber (37) eines elektromagnetisch betätigten Schieberventils (12a) gesteuert wird, welches zudem die Verbindung eines Rückbefüllungsanschlusses (Y) besagter einer Kammer (19) mit einem Reservoir (22) herstellt oder unterbricht.

11. Ein System gemäß Anspruch 10, das dadurch charakterisiert ist, daß die anfängliche Bewegung des Schiebers (37) zur Druckbeaufschlagung besagter anderer Kammer (18) auch die Verbindung (Y) zwischen dem Rückbefüllungsanschluß und besagter einer Kammer (19) unterbricht.

12. Ein System gemäß Ansprüchen 10 und 11, das dadurch charakterisiert ist, daß das Reservoir (10), welches mit dem Rückbefüllungsanschluß in Verbindung steht, auch das Fluid aufnimmt, welches aus besagter anderer Kammer (18) abläuft.

13. Ein System gemäß einem beliebigen der Ansprüche 10 bis 12, das dadurch charakterisiert ist, daß eine Kavitationsschutzeinrichtung (300) bereitgestellt wird, über die der Kolben bei rascher Rückkehr in seine zurückgezogene Stellung Fluid (Z) um Dichtungen (301) herum in besagte eine Kammer (19) im elektromagnetisch betätigten Schieberventil ansaugen kann.

14. Ein System gemäß einem beliebigen der Ansprüche 10 bis 13, das dadurch charakterisiert ist, daß eine Pumpe die Förderquelle des unter Druck stehenden Fluids (10) darstellt und der Schieber (37) des elektromagnetisch betätigten Ventils (12a) dergestalt ausgebildet ist, daß die Förderung der Pumpe in ein Behältnis (10a) ablaufen kann (X), wenn die andere Kammer (18) nicht unter Druck gesetzt ist, wobei dieser Ablaufpfad (X) durch Bewegung des Schiebers (37) zu Beginn des Druckaufbaus in der anderen Kammer (18) verschlossen wird.

15. Ein System gemäß einem beliebigen der Ansprüche 2 bis 14, das dadurch charakterisiert ist, daß eine Stange (33) sich von einer Seite des Kolbens (17) durch besagte Bohrung (16) hindurch erstreckt und aus besagtem Gehäuse (15) austritt, und daß ein Nachweismittel in Form eines Meßwandlers (38) mit besagter Stange (33) verbunden ist (37), um ein Ausgangssignal bereitzustellen, das die Betätigungsbewegung des Nehmerzylinders (11) widerspiegelt.

16. Ein System gemäß einem beliebigen der Ansprüche 1 bis 15, das dadurch charakterisiert ist, daß das Verdrängungsmittel (12) vom Nehmerzylinder (11) entfernt angeordnet ist.

17. Ein System gemäß Anspruch 16, das dadurch gekennzeichnet ist, daß das Verdrängungsmittel (12) sich neben der Förderquelle des unter Druck stehenden Fluids (10) befindet.

18. Ein System gemäß Anspruch 16, das dadurch gekennzeichnet ist, daß die Förderquelle des unter Druck stehenden Fluids aus einer hydraulischen Betätigungseinheit (10) besteht, zu welcher ein Hydraulikflüssigkeits-Vorratsbehälter (10a) gehört, eine Pumpe (10b) und ein Druckspeicher (10c), und wobei das besagte Verdrängungsmittel (12) auch Teil der besagten hydraulischen Betätigungseinheit bildet.

19. Ein System gemäß einem beliebigen der Ansprüche 2 bis 18, das dadurch charakterisiert ist, daß eine Stange (40) sich von einer Seite des Kolbens (17) durch besagte Bohrung (16) hindurch erstreckt und aus besagtem Gehäuse (15) austritt, wobei zu besagter Stange ein erstes Gestängebauteil (40) eines Mechanismus gehört, der die Betätigung einer Fahrzeugkupplung und einer Drosselklappe miteinander koppelt, wobei das erste Gestängebauteil (40) in Antwort auf das Auskuppeln der Kupplung in einer ersten Richtung beweglich ist und in Antwort auf das Einkuppeln der Kupplung in einer zweiten Richtung, und wobei zum Mechanismus ebenfalls ein zweites Gestängebauteil (41) gehört, welches mit der Drosselklappe des Fahrzeugs verbunden ist und in besagter erster Richtung beweglich ist, um die Drosselklappe zu schließen, und in besagter zweiter Richtung, um die Drosselklappe zu öffnen, und wobei ein Spielausgleichsverbinder (43, 44) das erste und das zweite Gestängebauteil (40, 41) miteinander verbindet und besagter Spielausgleichsverbinder eine anfängliche Bewegung des ersten Gestängebauteils (40) in die erste und die zweite Richtung zuläßt, ohne daß eine korrespondierende Bewegung des zweiten Gestängebauteils (41) in besagte erste und zweite Richtung erfolgen würde.

20. Ein System gemäß Anspruch 19, das dadurch charakterisiert ist, daß zu einem Spielausgleichsverbinder (43, 44) ein elastisches Mittel (45) gehört, welches den Kraftübertragungspfad zwischen dem ersten und dem zweiten Gestängebauteil (40, 41) zur Bewegung des zweiten Gestängebauteils (41) durch das erste Gestängebauteil (40) in besagte erste Richtung bereitstellt.

21. Ein System gemäß Anspruch 19 oder 20, das dadurch charakterisiert ist, daß das elastische Mittel durch einen zweiten Kolben (57) innerhalb der Stange (40) oder einer Verlängerung derselben bereitgestellt wird, welcher in betätigender Weise mit dem zweiten Gestängebauteil (41) verbunden ist und durch Federmittel in besagter erster Richtung vorgespannt ist.

22. Ein System gemäß Anspruch 21, das dadurch charakterisiert ist, daß es sich bei dem Federmittel um eine Feder mit fixierter Federrate (45) handelt, die eine fixiert phasenverschobene Beziehung zwischen der Bewegung des ersten (40) und des zweiten (41) Gestängebauteils in besagter erster Richtung vorgibt.

23. Ein System gemäß Anspruch 21, das dadurch charakterisiert ist, daß durch den zweiten Kolben (57) eine Kammer (53) innerhalb der Stange (40) definiert wird, die mit besagter einer Kammer (19) verbunden ist, um eine Bewegung des zweiten Kolbens innerhalb der Stange in Abhängigkeit vom Druckniveau in besagter einer Kammer zuzulassen, damit die phasenverschobene Beziehung zwischen der Bewegung des ersten (40) und des zweiten (41) Gestängebauteils in besagter erster Richtung variiert werden kann.

24. Ein System gemäß einem beliebigen der Ansprüche 19 bis 23, das dadurch charakterisiert ist, daß durch die Stange (33) zugleich ein Steigungshalteventil (60) in einem zugehörigen Fahrzeugbremssystem betätigt wird.

25. Ein System gemäß einem beliebigen der Ansprüche 1 bis 24, das dadurch charakterisiert ist, daß der Nehmerzylinder (11) eine Fahrzeugkupplung (14) betätigt.

26. Ein Verdrängungsventil (12) zur Verwendung in einem hydraulischen Betätigungssystem gemäß einem beliebigen der Ansprüche 1 bis 25, welches dadurch charakterisiert ist, daß hierzu ein Gehäuse (15) mit einem verschiebbar in einer Bohrung (16) des Gehäuses angeordneten Kolben (17) gehören, wobei zwei flüssigkeitsdicht gegeneinander abgedichtete Kammern (18, 19) auf den beiden Seiten des Kolbens gebildet werden und die eine Kammer (19) mit dem Nehmerzylinder (11) und die andere Kammer (18) mit der Förderquelle des unter Druck stehenden Fluids (10) verbunden ist und eine Bohrung (24, 25, 26) vorhanden ist, über die die besagten Kammern miteinander verbunden werden, sowie ein Ventilmittel (27), welches in besagter Bohrung dergestalt angeordnet ist, daß es den Fluidstrom zwischen den besagten Kammern und mithin zwischen besagter Förderquelle und dem Nehmerzylinder unterbricht oder steuert, wobei das besagte Ventilmittel (27) so ausgelegt ist, daß es sich in einer geöffneten Stellung befindet, wenn besagter Kolben (17) in einer zurückgezogenen Stellung steht und besagte andere Kammer (18) nur minimales Fluidvolumen enthält und besagter Nehmerzylinder (11) nicht betätigt wird, und das besagte Ventilmittel (27) gleichfalls so ausgelegt ist, daß es schließt, wenn der besagte Kolben (17) in der besagten Bohrung (16) gegen eine Rückstellkraft (32) unter dem Einfluß eines Druckanstiegs im besagten unter Druck stehenden Fluid verschoben wird, wodurch das Druckniveau in besagter einer Kammer (19) ansteigt und eine Betätigungsbewegung des Nehmerzylinders (11) auslöst, die sich proportional zur Bewegung des besagten Kolbens (17) verhält.

## Revendications

1. Un système d'actionnement comprenant une source de fluide sous pression (10) qui actionne un cylindre asservi (11) situé à un premier emplacement par l'intermédiaire d'un trajet (20, 23) de flux de fluide, le système étant caractérisé par l'agencement d'un moyen de décalage (12) dans ledit trajet de flux de fluide, ledit moyen de décalage (10) étant à un deuxième emplacement éloigné du cylindre asservi (11) et incluant un composant (17) qui est décalé par le fluide sous pression provenant de la source (10) de façon à provoquer un décalage qui est proportionnel au déplacement d'actionnement du cylindre asservi (11) provoqué par le fluide sous pression, et un moyen capteur (38) situé au deuxième emplacement et servant à mesurer ledit décalage afin d'indiquer le déplacement d'actionnement du cylindre asservi (11) au premier emplacement.

2. Un système selon la revendication 1, caractérisé en ce que le moyen de décalage comprend un piston (17) susceptible de coulisser axialement dans un alésage (16) d'un carter (15) pour définir deux chambres (18, 19) étanches aux fluides, l'une sur chacun des côtés du piston, une première chambre (19) étant connectée au cylindre asservi (11) et l'autre chambre (18) étant connectée à la source de fluide sous pression (10), et un organe de décalage (37) qui se déplace avec le piston (17) et s'étend à l'exténeur du carter pour coopérer avec le moyen capteur (38).

3. Un système selon la revendication 2 caractérisé en ce que le moyen de décalage est en forme de vanne de décalage (12) comportant un passage (24, 25, 26) qui connecte entre elles lesdites chambres (18, 19) situées sur chaque côté du piston (17), et un moyen (27) de vanne disposé dans ledit passage pour interrompre ou régler le passage de fluide entre lesdites chambres et donc entre ladite source (10) et ledit cylindre asservi (11), ledit moyen (27) de vanne étant agencé pour être ouvert lorsque ledit piston (17) est dans une condition rétractée dans laquelle ladite autre chambre (18) est à un volume minimal et ledit cylindre asservi (11) n'est pas manoeuvré, et ledit moyen (27) de vanne étant agencé pour se fermer au fur et à mesure que ledit piston (17) est décalé en opposition à une force de sollicitation (32) le long dudit alésage (16) en réponse à une élévation de la pression dudit fluide sous pression, en élevant donc le niveau de pression dans ladite première chambre (19) afin de provoquer un déplacement d'actionnement du cylindre asservi (11) proportionnel au déplacement dudit piston (17).

4. Un système selon la revendication 3, caractérisé en ce que le moyen (27) de vanne qui règle le passage de fluide d'actionnement entre les deux chambres (18, 19) comprend une soupape de retenue (27) qui est sollicitée élastiquement (29) vers une condition normalement fermée, ladite soupape de retenue étant ouverte lorsque ledit piston (17) est dans sa condition rétractée par un moyen de broche (30) qui est au contact d'une extrémité de l'alésage (16) et qui déloge la soupape de retenue (27).

5. Un système selon la revendication 2, caractérisé en ce que ladite première chambre (19) communique avec un réservoir (10c) lorsque le piston est dans une condition rétractée et que ladite autre chambre (18) est à un volume minimal, ladite communication avec le réservoir se fermant au fur et à mesure que ledit piston (17) est décalé le long dudit alésage (16) en réponse à une élévation de la pression dans ladite autre chambre (18) en élevant le niveau de pression dans ladite première chambre (19) pour provoquer un déplacement d'actionnement du cylindre asservi (11) proportionnel au déplacement dudit piston (17).

6. Un système selon l'une quelconque des revendications 2 à 5 caractérisé en ce que le piston (17) comporte deux joints étanches (18a, 19a) espacés axialement qui assurent l'étanchéité de ladite première chambre (19) et de ladite autre chambre (18) et qui définissent une chambre (25) contenant un fluide entre lesdits joints étanches axialement espacés, la chambre (25) contenant un fluide communiquant aussi (52) avec le réservoir dans la condition rétractée du piston et devenant séparée du réservoir au fur et à mesure que ledit piston (17) est décalé le long dudit alésage (16).

7. Un système selon la revendication 2 caractérisé en ce que le piston (77) coulisse aussi en contact étanche au-dessus d'un organe fixe intérieur (90) de piston afin de définir ladite première chambre (79) entre le piston coulissant et le piston intérieur (90) et l'autre chambre (78) entre le piston coulissant (77) et l'alésage (76) de carter.

8. Un système selon la revendication 7 caractérisé en ce qu'un réservoir (92) entoure ledit organe intérieur de piston fixe (90) et un orifice de récupération (104) est ménagé dans le piston coulissant (77), orifice qui permet une communication entre ladite première chambre (79) et le réservoir (92) lorsque le piston coulissant (77) est dans sa position rétractée et que l'autre chambre (78) et à son volume minimal.

9. Un système selon la revendication 7 caractérisé en ce que l'organe de piston fixe (90) inclut un passage de remplissage (118) qui communique avec ladite première chambre (79), un flux de fluide à travers le passage de remplissage étant réglé par un organe de vanne (115) qui est maintenu ouvert par un moyen élastique (119) lorsque le piston coulissant (77) est dans sa condition rétractée dans laquelle l'autre chambre (78) est à son volume minimal et qui est fermé par un déplacement initial du piston coulissant (72) lors de la mise sous pression de ladite autre chambre (78).

10. Un système selon la revendication 2 caractérisé en ce que l'alimentation en fluide sous pression de ladite autre chambre (18) et l'évacuation de fluide à partir de celle-ci sont commandées par un déplacement axial d'une bobine (37) d'une vanne (12a) à électroaimant qui commande aussi la connexion d'un orifice de récupération (Y) de ladite première chambre (19) avec un réservoir (22).

11. Un système selon la revendication 10 caractérisé en ce qu'un décalage axial initial de la bobine (37) pour mettre sous pression ladite autre chambre (18) interrompt aussi la communication (Y) entre l'orifice de récupération et ladite première chambre (19).

12. Un système selon la revendication 10 ou 11 caractérisé en ce que le réservoir (10) qui communique avec l'orifice de récupération reçoit aussi le fluide qui est évacué de ladite autre chambre (18).

13. Un système selon l'une quelconque des revendications 10 à 12 caractérisé en ce qu'il est agencé un aménagement anti-cavitation (300) au moyen duquel le piston peut aspirer un fluide (Z) vers ladite première chambre (19) autour de joints étanches (301) dans la vanne à bobine à électroaimant lors d'un retour rapide du piston vers sa position rétractée.

14. Un système selon l'une quelconque des revendications 10 à 13 caractérisé en ce que la source de fluide sous pression (10) consiste en une pompe et la bobine (37) de la vanne (12a) à électroaimant est également agencée pour refouler (X) vers un bac (10a) la sortie de la pompe lorsque l'autre chambre (18) n'est pas sous pression, ce trajet de puits (X) étant interrompu lors d'un déplacement de la bobine (32) afin de débuter la mise sous pression de l'autre chambre (18).

15. Un système selon l'une quelconque des revendications 2 à 14 caractérisé en ce qu'une tige (33) s'étend d'un premier côté du piston (17) le long dudit alésage (16) et sort dudit carter (15), et un moyen de détection en forme de transducteur (38) est connecté (37) à ladite tige (33) afin de produire une sortie de signal représentative du déplacement d'actionnement du cylindre asservi (11).

16. Un système selon l'une quelconque des revendications 1 à 15 caractérisé en ce que le moyen de décalage (12) est situé à distance du cylindre asservi (11).

17. Un système selon la revendication 16 caractérisé en ce que le moyen de décalage (12) est adjacent à la source de fluide sous pression (10).

18. Un système selon la revendication 16 caractérisé en ce que la source de fluide sous pression comprend un bloc d'alimentation hydraulique (10), qui comprend un réservoir hydraulique (10a), une pompe (10b) et un accumulateur (10c), ledit moyen de décalage (12) faisant lui aussi partie dudit bloc d'alimentation .

19. Un système selon l'une quelconque des revendications 2 à 18, caractérisé en ce qu'une tige (40) s'étend d'un premier côté du piston (17) le long dudit alésage (16) et sort dudit carter (15), ladite tige comprenant un premier organe de liaison (40) d'un mécanisme d'interconnexion de l'actionnement d'un embrayage et d'un papillon des gaz d'un véhicule, le premier organe de liaison (40) étant mobile dans un premier sens en réponse à un dégagement de l'embrayage et dans un deuxième sens en réponse à une mise en prise de l'embrayage, le mécanisme incluant aussi un deuxième organe de liaison (40) connecté au papillon des gaz du véhicule et mobile dans un premier sens pour fermer le papillon des gaz et dans un deuxième sens pour ouvrir le papillon des gaz, et une connexion (43, 44) à course morte qui connecte le premier et le deuxième organes de liaison (40, 41), ladite connexion à course morte permettant un déplacement initial du premier organe de liaison (40) dans le premier et le deuxième sens sans aucun déplacement correspondant du deuxième organe de liaison (41) dans lesdits premier et deuxième sens.

20. Un système selon la revendication 19 caractérisé en ce que la connexion (43, 44) à course morte inclut un moyen élastique qui constitue le trajet de transmission de force entre le premier et le deuxième organes de liaison (40, 41) en vue d'un déplacement du deuxième organe de liaison (41) dans ledit premier sens par le premier organe de liaison (40).

21. Un système selon l'une des revendications 19 ou 20, caractérisé en ce que le moyen élastique consiste en un deuxième piston (57) à l'intérieur de la tige (40) ou d'une extension de celle-ci qui est connecté fonctionnellement au deuxième organe de liaison (41) et est sollicité dans ledit premier sens par un moyen élastique.

22. Un système selon la revendication 21 caractérisé en ce que le moyen élastique est un ressort (45) à taux de rappel fixe qui établit une relation de phase fixe entre le déplacement des premier (40) et deuxième (41) organes de liaison dans ledit premier sens.

23. Un système selon la revendication 21 caractérisé en ce que le deuxième piston (57) définit à l'intérieur de la tige (40) une chambre (53) qui est connectée à ladite première chambre (19) pour permettre un déplacement du deuxième piston à l'intérieur de la tige en fonction du niveau de pression dans ladite première chambre afin de permettre que la relation de phase entre le déplacement des premier (40) et deuxième (41) organes de liaison dans ledit premier sens varie.

24. Un système selon l'une quelconque des revendications 19 à 23 caractérisé en ce que la tige (33) manoeuvre aussi une vanne (60) d'encliquetage anti-recul dans un système associé de freins de véhicule.

25. Un système selon l'une quelconque des revendications 1 à 24 caractérisé en ce que le cylindre asservi (11) manoeuvre un embrayage (14) de véhicule.

26. Une vanne de décalage (12) à utiliser dans un système d'actionnement hydraulique selon l'une quelconque des revendications 1 à 25, ladite vanne de décalage étant caractérisé en ce qu'elle comprend un carter (15) contenant un piston (17) qui peut coulisser dans un alésage (16) du carter afin de définir deux chambres (18, 19) étanches aux fluides, une sur chaque côté du piston, une première chambre (19) étant connectée au cylindre asservi (11) et l'autre chambre (18) étant connectée à la source de fluide sous pression (10), un passage (24, 25, 26) connectant entre elles lesdites chambres, et un moyen (27) de vanne disposé dans ledit passage pour interrompre ou régler le passage de fluide entre lesdites chambres et donc entre ladite source et ledit cylindre asservi, ledit moyen (27) de vanne étant agencé pour être ouvert lorsque ledit piston (17) est dans une condition rétractée dans laquelle ladite autre chambre (18) est à un volume minimal et ledit cylindre asservi (11) n'est pas manoeuvré et ledit moyen (27) de vanne étant agencé pour se fermer au fur et à mesure que ledit piston (17) est décalé le long dudit alésage (16) en opposition à une force de sollicitation (32) en réponse à une élévation dans ledit fluide sous pression en élevant ainsi le niveau de pression dans ladite chambre (19) de façon à provoquer un déplacement d'actionnement dudit cylindre asservi (11) proportionnel au déplacement dudit piston (17).
